Europäisches Patentamt
European Patent Office
Office européen des brevets

(11) Numéro de publication: **0 023 941**
**A1**

# (12) DEMANDE DE BREVET EUROPEEN

(21) Numéro de dépôt: 79400562.9

(22) Date de dépôt: 10.08.79

(51) Int. Cl.³: **A 01 J 25/00**
**A 01 J 25/12**

(43) Date de publication de la demande:
18.02.81 Bulletin 81/7

(84) Etats Contractants Désignés:
BE CH DE GB LU NL SE

(71) Demandeur: FROMAGERIES BEL
4, rue d'Anjou
F-75008 Paris(FR)

(72) Inventeur: Georgel, Gaston Paul Victor
1 rue Carnot
F-53600 Evron(FR)

(72) Inventeur: Guyonnet, Marcel Aimé René
25 rue Anatole France
F-92370 Chaville(FR)

(74) Mandataire: Barnay, André François
Cabinet Barnay 80 rue Saint-Lazare
F-75009 Paris(FR)

(54) Procédé et appareil de moulage de caillé pour la fabrication de fromages de petites dimensions.

(57) Un mélange caillé-sérum, introduit dans une trémie (10), remplit des tubes perforés (12) où le sérum se sépare du caillé qui devient compact. Une plaque obturant la base des tubes (12) s'efface périodiquement et le caillé tombe brusquement d'une hauteur déterminée sur une plaque sousjacente (24), puis est tranché par la première plaque revenant en position initiale. Les tranches de caillé sont ensuite transférées dans un des moules à plusieurs alvéoles.

./...

FIG.1

1

Procédé et appareil de moulage de caillé pour la fabrication de fromages de petites dimensions.

L'invention se rapporte à la fabrication de fromages de petites dimensions à partir de portions de caillé de lait obtenues par expulsion du sérum d'un mélange caillé-sérum, puis par moulage dans la forme convenable.

Il est connu d'utiliser, pour réaliser les portions de caillé, des tubes perforés que l'on charge avec le mélange caillé-sérum et/à travers la paroi desquels le sérum s'échappe, tandis qu'on fait glisser progressivement vers le bas, à l'aide d'un piston, le caillé aggloméré. Lorsqu'une quantité convenable de la colonne de caillé ainsi formée dans chaque tube émerge à la base de celui-ci, on la sectionne et on obtient ainsi une portion de caillé calibrée en largeur et en épaisseur, que l'on introduit dans un moule.

Un tel procédé, qui est généralement mis en oeuvre sur une machine rotative où les tubes perforés sont disposés en cercle, suivant les génératrices d'un cylindre, présente l'inconvénient que le caillé, s'agglomérant en descendant progressivement dans les tubes perforés, a tendance à colmater les perforations de ceux-ci, de sorte que l'expulsion du sérum est entravée et qu'il apparaît des incidents de fonctionnement.

L'invention a pour objet un nouveau procédé permettant d'écarter cet inconvénient. Le procédé selon l'invention consiste à agglomérer le caillé en une colonne compacte dans un tube perforé vertical fixe et à faire tomber brusquement d'une hauteur déterminée, et cela d'une manière périodique, la colonne de caillé ainsi formée, puis à sectionner la portion de celle-ci émergeant alors au bas du tube et à placer dans un moule la tranche de caillé ainsi obtenue. Cette tranche de caillé est calibrée en largeur et en épaisseur comme dans le procédé connu. Toutefois, elle ne résulte pas du tranchage de la partie inférieure d'une colonne de caillé glissant et émergeant progressivement à la base d'un tube perforé. Au contraire, dans le procédé selon l'invention, la portion de caillé à sectionner apparaît périodiquement grâce à la chute brusque de toute la colonne de caillé, qui s'accompagne d'un coup de bélier et d'une onde de choc avec effet de surpression dans ladite colonne, ce qui a pour effet d'empêcher le colmatage du tube perforé ou d'éliminer toute amorce de colmatage. On obtient ainsi un fonctionnement sûr et régulier, sans incidents causant des pertes de temps.

L'invention a également pour objet un appareil permettant de mettre en oeuvre le procédé décrit ci-dessus. Cet appareil comprend essentiellement un poste de formation, par agglomération et expulsion continues du sérum, d'au moins une colonne de caillé dans au moins un tube perforé vertical fixe, surmonté d'une trémie d'alimentation en mélange caillé-sérum, et, au-dessous, un poste de tronçonnement du caillé comportant un organe obturateur de l'issue inférieure du tube perforé, cet organe s'effaçant périodiquement, de sorte que, à chaque fois, la colonne de caillé du tube perforé tombe brusquement d'une hauteur déterminée sur un organe d'arrêt sous-jacent, la portion de caillé correspondante étant alors sectionnée, puis introduite dans un moule.

Avantageusement, chaque tranche de caillé ainsi obtenue par tronçonnement de la colonne de caillé n'est pas mise directement dans le moule, mais elle est transportée jusqu'à un poste de transfert placé à côté du poste de tronçonnement, où elle est introduite dans le moule. Cela permet de décomposer et d'accomplir dans des conditions optimales les opérations de sectionnement et de transfert dans le moule. A cet effet, de préférence, la portion inférieure de la colonne de caillé du tube perforé tombe dans une bague mobile qui assure, après sectionnement de cette portion, son transport jusqu'au poste de transfert où le moule, amené sous la bague, reçoit la tranche de caillé sous l'action positive d'un poussoir qui la fait descendre de la bague dans le moule.

Dans une forme d'exécution avantageuse, le poste de tronçonnement comprend trois plaques horizontales superposées, chacune étant animée d'un mouvement alternatif propre de translation dans son plan, savoir une première plaque qui, successivement, obture l'issue inférieure du tube perforé, s'efface puis revient en sectionnant la portion de caillé émergeant alors du tube et reposant sur une deuxième plaque, qui constitue l'organe d'arrêt précité, à l'intérieur de ladite bague, laquelle, fixée dans une troisième plaque qu'elle traverse par une ouverture correspondante, assure, par le mouvement de cette plaque qu'accompagne la deuxième plaque, le transport de la tranche de caillé jusqu'au poste de transfert, où la deuxième plaque s'efface, permettant le transfert de ladite tranche dans le moule.

Pour amener dans le poste de transfert le moule qui reçoit la tranche de caillé, ce moule une fois chargé étant ensuite dirigé vers la sortie de l'appareil et évacué, on prévoit de préférence une série de moules progressant pas à pas sur des rails de guidage à travers le poste de transfert, de telle sorte que, à chaque pase de la progression, un moule se trouve exactement à l'aplomb de la bague garnie de caillé et arrêtée dans le poste de transfert, ce moule étant soulevé alors des rails et amené au voisinage du bord inférieur de la bague, puis ramené sur les rails où il participe de nouveau à la progression pas à pas de la série de moules, jusqu'à son évacuation de l'appareil du fait même de cette progression.

Les moules peuvent être fournis par un poste de distribution qui les place automatiquement, à partir d'un carter d'alimentation, en succession sur les rails de guidage et les y fait avancer pas à pas. De préférence, ce poste de distribution comprend une paire de lames pointues animées d'un mouvement alternatif parallèle aux rails, lesquelles viennent s'introduire entre le moule inférieur, reposant sur les rails, et les autres moules empilés dans ledit carter, et soutiennent ces derniers en libérant ledit moule inférieur que des coulisseaux, solidaires desdites lames, poussent en direction du poste de transfert, et avec lui tous les moules déjà placés en succession sur les rails, les lames et les coulisseaux revenant ensuite dans leur position initiale, de sorte que la pile de moules du carter retombe sur les rails et que le cycle suivant peut commencer.

L'appareil selon l'invention peut comporter non pas un seul tube perforé, mais un groupe de tubes perforés formant autant de colonnes de caillé dont les portions inférieures, simultanément libérées et sectionnées, donnent naissance à chaque fois à un groupe de tranches de caillé remplissant un groupe de bagues pour être transféré par un groupe de poussoirs dans un moule unique comportant un groupe d'alvéoles distincts dont chacun reçoit une tranche de caillé. Bien entendu, la disposition géométrique (vue en projection sur un plan horizontal) des groupes de tubes perforés, de bagues, de poussoirs et d'alvéoles de moulage est identique.

Le fonctionnement de l'appareil est entièrement automatique, les mouvements des divers organes mobiles étant coordonnés en temps et en amplitude de manière que ces organes exécutent leur action au moment convenable de chaque cycle de fonctionnement, et assurent les coïncidences nécessaires, dans les phases d'arrêt du mouvement des organes de transport et de transfert (notamment des bagues, des poussoirs et des moules).

Pour améliorer l'agglomération du caillé et la séparation du sérum dans le poste de formation du caillé en masse compacte, il est recommandé selon l'invention d'entourer le tube perforé ou le groupe de tubes perforés d'une enceinte étanche dont l'intérieur est divisé en deux parties par une cloison horizontale, l'enceinte étant munie dans chacune de ces parties d'une tubulure d'évacuation du sérum. On évite ainsi que le sérum qui s'échappe en abondance du mélange caillé-sérum dans la région supérieure atteigne la région inférieure et y contrarie l'agglomération du caillé en masse de plus en plus compacte.

La description qui va suivre, en regard des dessins annexés à titre d'exemples non limitatifs, permettra de bien comprendre comment l'invention peut être mise en pratique.

La figure 1 représente, en coupe longitudinale suivant la ligne I-I de la figure 2, un appareil selon l'invention.

La figure 2 représente en plan une paire d'appareils selon l'invention couplés côte à côte.

La figure 3 représente, à échelle agrandie, la partie centrale de l'appareil de la figure 1, comprenant, superposés, le poste de formation et le poste de tronçonnement du caillé, les plaques mobiles de ce dernier poste étant dans une autre position.

La figure 4 représente, à l'échelle de la figure 3, la partie centrale de l'appareil vue suivant la ligne de coupe IV-IV de la figure 2.

Les figures 5 et 6 représentent, à la manière de la figure 1 mais à l'échelle des figures 3 et 4, le poste de transfert situé en aval des postes de formation et de tronçonnement du caillé, respectivement dans deux positions de fonctionnement.

Les figures 7 et 8 représentent, à la manière de la figure 1 mais à l'échelle des figures 3 à 6, le poste de distribution des moules situé en amont des postes de formation et de tronçonnement du caillé, respectivement dans deux positions de fonctionnement.

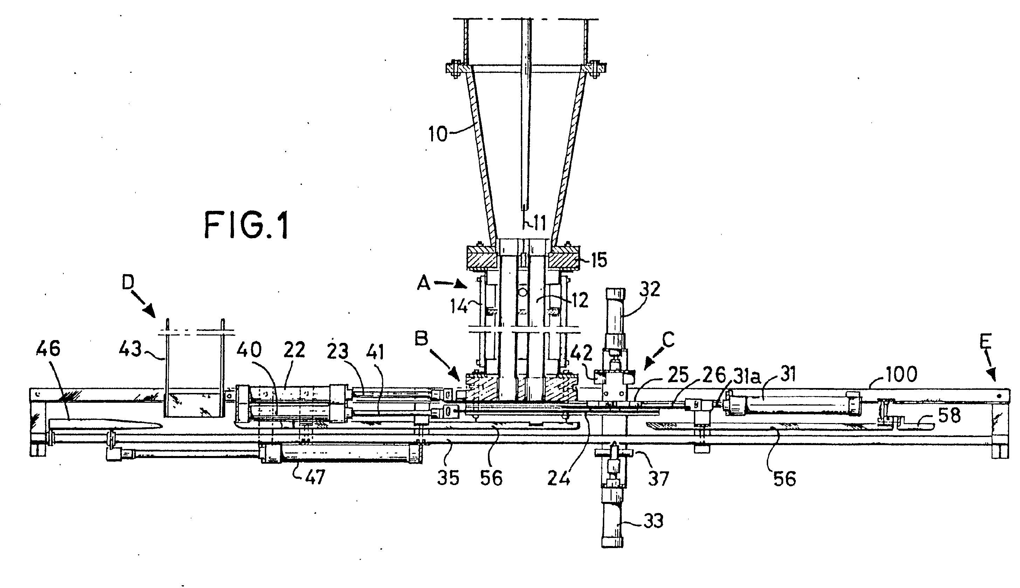

L'appareil selon l'invention qui va être décrit permet de mouler des portions de caillé suivant la forme désirée en vue de la confection, à partir de celles-ci, de fromages de petites dimensions. Comme le montre la figure 1, cet appareil comprend essentiellement, montés en position fixe, sur un châssis 100, un poste de formation A où le caillé s'agglomère et se sépare du sérum, un poste de tronçonnement B où le caillé aggloméré est tranché en portions de dimensions convenables et un poste de transfert C où les portions de caillé sont placées dans des moules en provenance d'un poste de distribution D, les moules garnis de caillé étant évacués dans une région de sortie E.

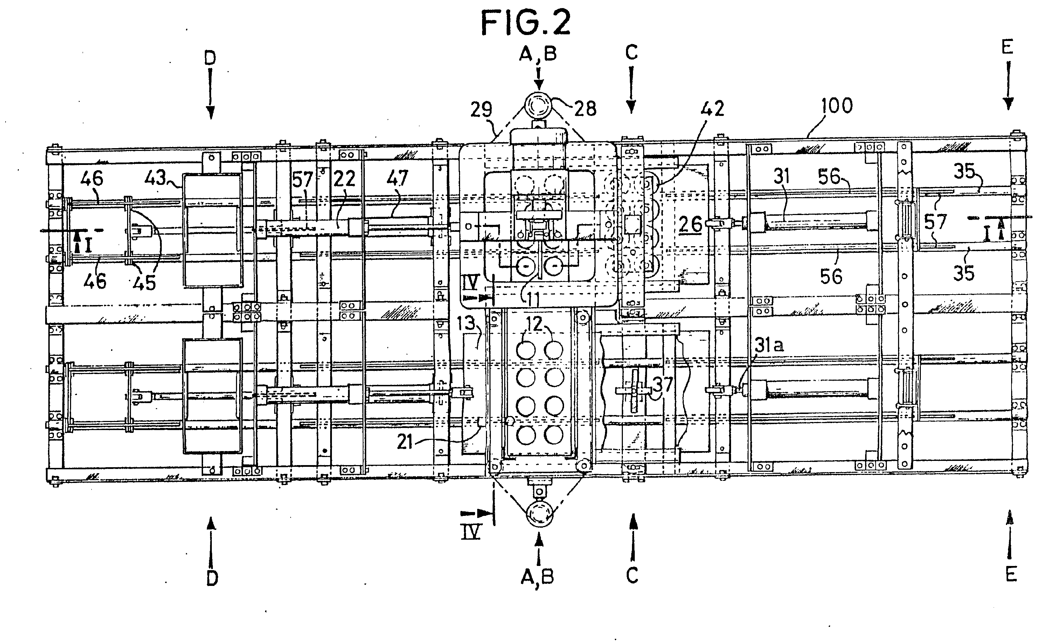

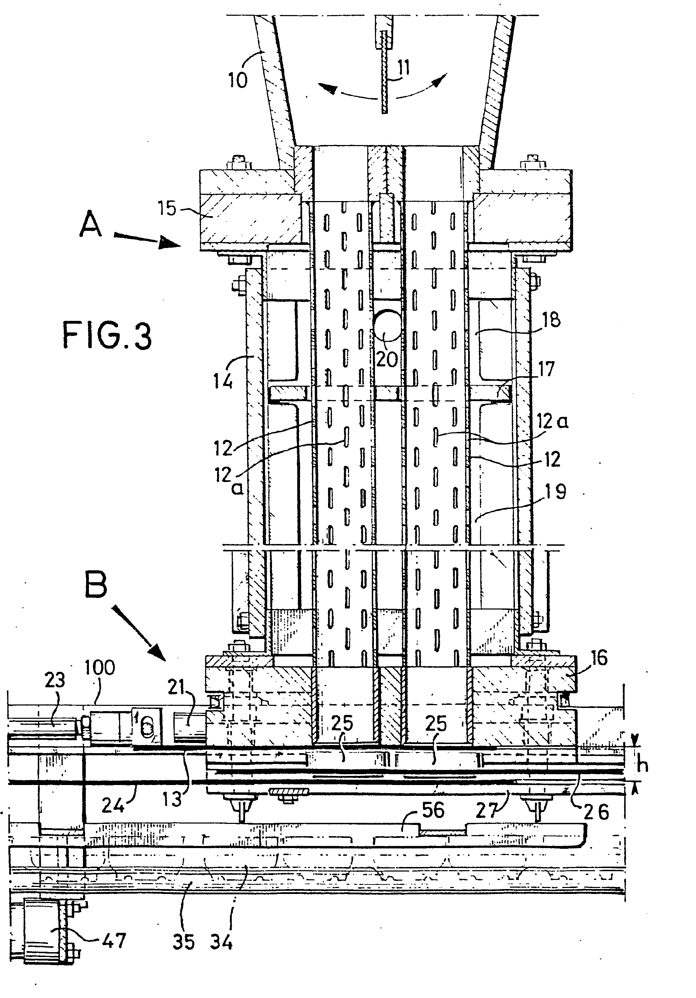

Au sommet du poste A (figures 1 et 3) est prévue une trémie 10 recevant un mélange de caillé et de sérum qui est brassé par un agitateur 11 et dont le niveau est maintenu constant. A la base de la trémie 10 se raccordent un certain nombre de tubes verticaux 12 fixes, en forme de cylindre de révolution, savoir un groupe de huit tubes répartis en deux rangées de quatre dans le présent exemple (figure 2), dans lesquels s'accumule et se décante le mélange de caillé et de sérum. Ces tubes sont dotés de perforations 12a oblongues, disposées en quinconce et orientées verticalement, par où s'écoule le sérum, tandis que le caillé s'agglomère dans les tubes 12 par gravité en des masses compactes en forme de colonnes, qui reposent sur une plaque horizontale 13 obturant l'issue inférieure des tubes 12. L'ensemble des huit tubes 12 est enfermé dans une enceinte étanche formée d'une enveloppe 14 transparente et de deux brides 15, 16 dotées de huit ouvertures de traversée des tubes 12, la bride supérieure 15 se raccordant à la trémie 10 et la bride inférieure 16 étant fixée au châssis 100. L'espace intérieur de l'enveloppe 14 est divisé par une cloison 17 en une partie supérieure 18 où a lieu un fort écoulement de sérum que ladite cloison, formant barrage, empêche de descendre le long des tubes 12 et qui s'évacue par une tubulure 20, et en une partie inférieure 19 où la fraction restante du sérum s'écoule et est évacuée par une tubulure 21. On obtient ainsi huit colonnes de caillé, à la base desquelles le caillé est compact et presque complètement débarrassé du sérum qui l'accompagnait.

La plaque 13 est mobile et peut se déplacer en translation sous l'action d'un vérin 22 horizontal dont la tige 23 est attelée à ladite plaque. Lorsque ce vérin est actionné, la plaque 13 coulisse vers la gauche suivant la représentation des figures et démasque les extrémités inférieures des tubes 12. Les huit colonnes de caillé tombent alors brusquement d'une hauteur $h$ (figure 3), limitée par une deuxième plaque 24 horizontale, sous-jacente à la plaque 13, en pénétrant à l'intérieur de huit bagues 25 portées par une troisième plaque 26 intermédiaire située entre les deux premières, ces bagues traversant la plaque 26 par des ouvertures correspondantes. Puis, le vérin 22 ramenant la plaque 13 dans sa position initiale, celle-ci joue alors le rôle d'une guillotine et tranche la partie inférieure des huit colonnes de caillé, de sorte qu'on obtient huit tranches de caillé circulaires, de diamètre égal au diamètre des tubes 12 (de l'ordre de 40 mm) et d'épaisseur égale à la hauteur de chute $h$ des colonnes de caillé (de l'ordre de 20 mm), ces tranches calibrées étant logées à l'intérieur des bagues 25.

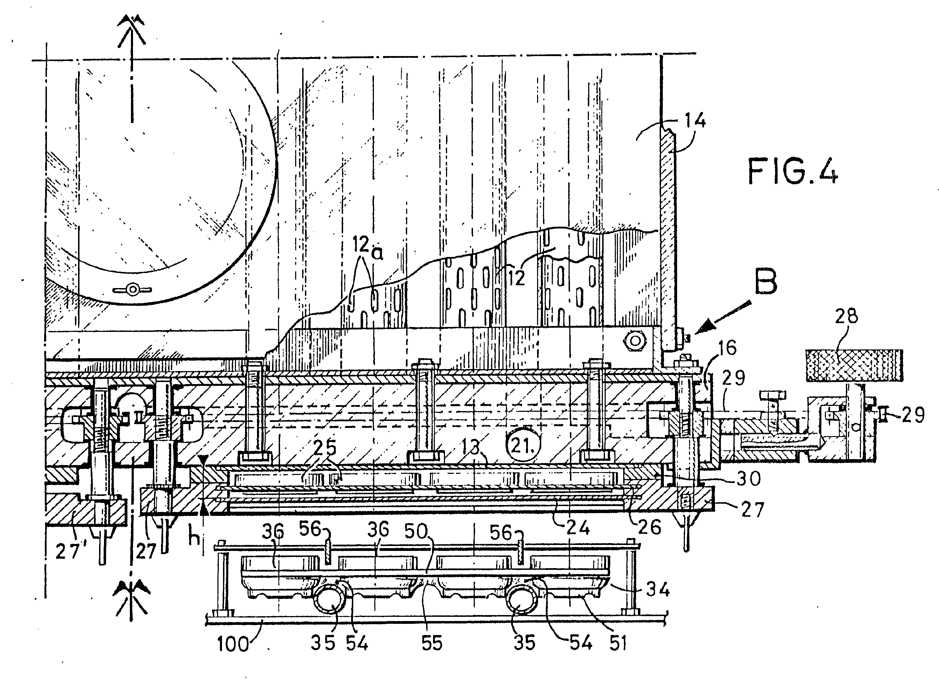

La hauteur $h$ est de préférence réglable, afin de pouvoir être ajustée en fonction de l'épaisseur désirée pour les fromages à confectionner à partir des portions de caillé. A cet effet, comme le montre la figure 4, la plaque inférieure 24 (ainsi que la plaque intermédiaire

26) est guidée dans une glissière 27 de niveau réglable au moyen d'un bouton de commande 28 actionnant par une transmission à chaîne 29 un mécanisme à vis-mères et écrous. On a représenté à titre d'exemple dans la partie gauche de la figure 4 une glissière 27' réglée à un niveau inférieur à celui de la glissière 27 de la partie droite. Pour sa part, la plaque 13 reste toujours au même niveau et est guidée contre la face inférieure de la bride 16 par une glissière fixe 30.

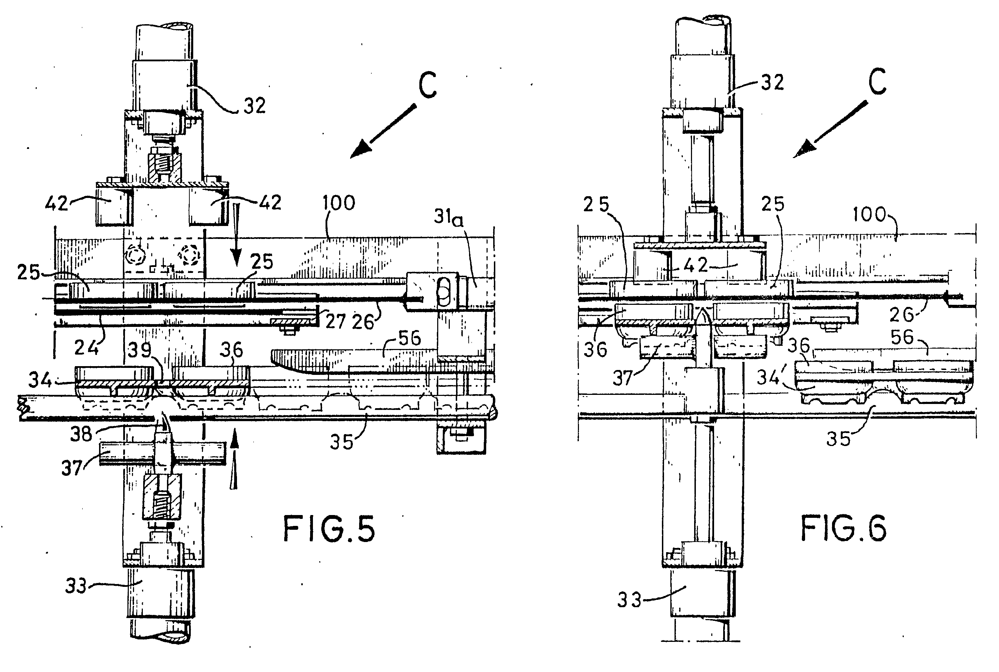

La plaque intermédiaire 26 et ses bagues 25 garnies des portions calibrées de caillé sont à leur tour déplacées en coulissement, par la tige 31a d'un vérin 31 également horizontal, jusqu'à ce que les bagues 25 viennent et s'arrêtent dans le poste de transfert C (position représentée sur la figure 1) à l'aplomb d'une paire de vérins verticaux 32, 33, situés respectivement au-dessus et au-dessous des plaques 26 et 24. Cette dernière plaque accompagne la plaque 26 dans son mouvement de translation, sous l'action d'un vérin 40 à la tige 41 duquel elle est reliée. A l'aplomb des vérins 32, 33 se trouve également présent un moule 34 (figure 5), porté par des rails fixes 35 et comportant huit alvéoles 36 en regard des huit bagues 25. Le vérin inférieur 33 entre alors en action et fait monter un support comprenant un croisillon porteur 37 qui s'engage dans les intervalles entre alvéoles 36 et un doigt de centrage 38 qui pénètre dans un trou central 39 du moule 34, soulevant ainsi ce dernier, qui vient appliquer ses alvéoles 36 contre la face inférieure de la plaque 24. Celle-ci s'efface vers la gauche (en revenant dans la position représentée sur la figure 3), sous l'action du vérin 40, de sorte que les alvéoles 36 viennent s'emboîter sur le bord inférieur des bagues 25 (figure 6). Le vérin 32 entre aussitôt en action et fait s'abaisser huit poussoirs 42 qui forcent les huit portions de caillé à descendre des bagues 25 dans les alvéoles 36 du moule 34, où elles prennent la forme précise désirée.

Puis les vérins 32 et 33 se rétractent, de sorte que le moule 34 garni de caillé redescend sur les rails 35, puis glisse vers la droite (position 34' sur la figure 6) en s'acheminant vers la zone d'éjection E de l'appareil, tandis que la plaque 24 revient en position de repos et que la plaque 26 retourne sous les tubes 12. Le cycle décrit se répète ensuite identiquement.

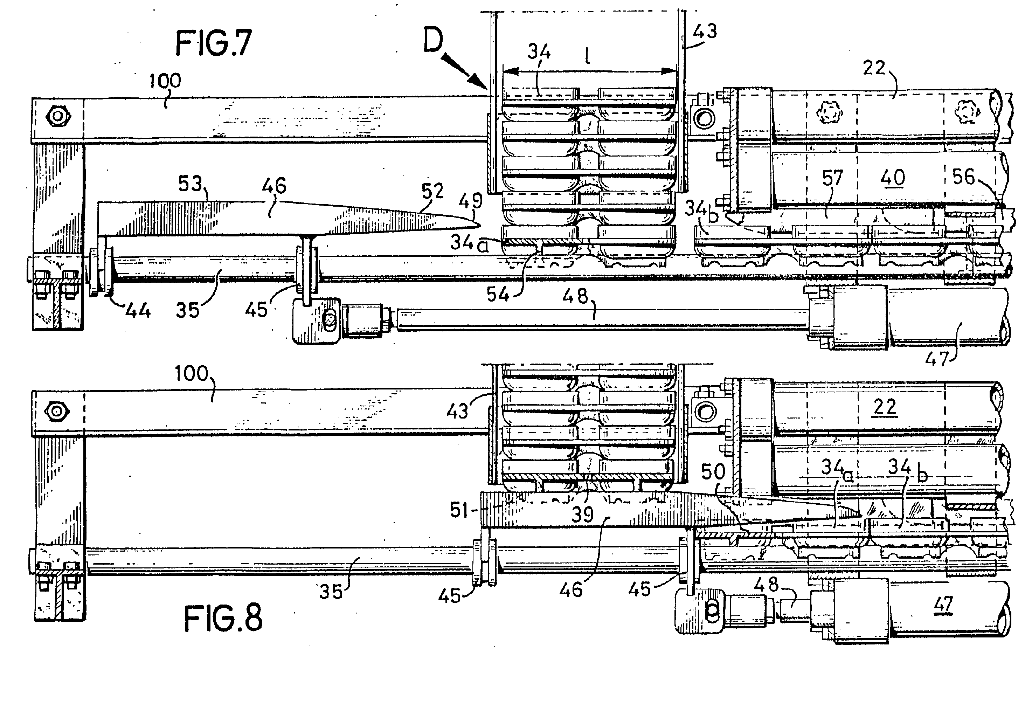

Les moules 34 nécessaires aux cycles successifs de moulage des portions de caillé sont fournis par le poste de distribution D situé dans la partie gauche de l'appareil. Celui-ci comprend un carter d'alimentation 43 fixe sans fond qui surmonte les rails 35 et dans lequel sont empilés un certain nombre de moules 34 (figure 7), le moule inférieur 34a reposant sur les rails 35 qui s'étendent rectilignement sur toute la longueur de l'appareil entre le poste D et la région E d'évacuation des moules chargés de caillé (figure 1). Sur ces rails peuvent glisser des coulisseaux 44, 45, portant une paire de lames pointues 46 ou "skis", sous l'action d'un vérin 47 placé horizontalement sous les rails 35. Lorsque le vérin 47 fait se rétracter sa tige 48 (figure 8), les skis 46, dont la pointe antérieure 49 est située à une hauteur appropriée au-dessus des rails 35, pénètrent entre le moule inférieur 34a et le moule situé immédiatement au-dessus de celui-ci; d'une part, ils passent entre les alvéoles du moule 34a et au-dessus de la feuille 50 de ce moule (la feuille 50 est une feuille appartenant à chaque moule 34 et réunissant ses alvéoles 36), de sorte qu'ils ne causent aucun déplacement dudit moule 34a; d'autre part, ils soulèvent par leur partie antérieure en rampe 52, puis soutiennent par leur partie postérieure horizontale 53 les autres moules empilés dans le carter 43, de manière à désemboîter des huit alvéoles du moule 34a les huit collerettes inférieures 51 correspondantes du moule immédiatement supérieur. Les coulisseaux antérieurs 45 rencontrent le moule 34a, ainsi libéré de l'emprise des autres moules, et l'entraînent vers la droite, d'une quantité légèrement supérieure à la largeur $l$ des moules 34, en le faisant glisser sur les rails 35. Ce mouvement cause un déplacement d'amplitude exactement égale à $l$ du moule 34b déposé sur les rails 35 au cycle précédent et de toute la série de moules 34 (représentés en traits mixtes sur la figure 3) déjà déposés et recouvrant côte à côte les rails 35 jusqu'à la zone d'évacuation E où les moules sont éjectés de l'appareil. Enfin, le vérin 47 fait revenir les skis 46 dans leur position initiale (figure 7), la pile de moules 34 retombant par gravité sur les rails 35 où le moule suivant est alors disponible pour être de même isolé des moules qui le surmontent par les skis 46 et poussé vers la droite par les coulisseaux 45.

La position relative du poste de distribution D et du poste de transfert C le long des rails 35 est choisie de telle manière que, à chaque phase de repos de la série de moules 34 entre deux pas successifs d'avancement, un moule s'arrête exactement à l'aplomb des vérins 32, 33 et des bagues 25 contenant les tranches de caillé et solidaires de la plaque 26 également arrêtée en position convenable à ce moment-là, de manière que ce moule puisse être correctement pris en charge par les éléments de soulèvement 37, 38 du vérin 33 et recevoir d'une manière parfaite les huit tranches de caillé dans ses huit alvéoles 36, comme l'illustrent les figures 5 et 6. D'une manière plus générale, les déplacements des divers organes mobiles de l'appareil (plaques 13, 24, 26 et skis 46 solidaires des coulisseaux 44, 45) s'effectuent en synchronisme mutuel par commande coordonnée de leurs vérins d'actionnement respectifs 22, 40, 31 et 47, la course respective des tiges de ces vérins étant ajustée pour obtenir le fonctionnement décrit.

La conformation des moules 34 à huit alvéoles apparaît notamment aux figures 4 et 8. Les huit alvéoles 36, disposés suivant une configuration en deux rangées de quatre correspondant exactement à celle des huit tubes 12 et des huit bagues 25, sont reliés par la feuille 50, plane et rectangulaire, à peu près à mi-hauteur et sont chacun pourvus à leur base de la collerette 51 permettant l'emboîtement mutuel de moules 34 en superposition. La feuille 50 est percée en son centre du trou 39 pour le doigt de centrage 38 (figures 5 et 6). Les alvéoles 36 d'une même rangée sont reliés, sous la feuille 50, par de petites cloisons 54, 55 offrant chacune une échancrure semi-circulaire. Les moules 34 reposent et sont guidés sur les rails 35 par les échancrures des cloisons 54, qui en épousent le profil, tandis que les échancrures des cloisons médianes 55 coopèrent dans le poste de transfert C avec la branche parallèle aux rails 35 du croisillon 37 du vérin 33. Chaque moule 34 est fait d'une seule pièce par moulage de matière plastique.

Dans leur progression le long des rails 35, les moules 34 sont guidés en outre par des contre-rails 56 situés au-dessus des rails 35 et passant entre des alvéoles 36, comme le montre la figure 4. Ces contre-rails empêchent tout soulèvement intempestif des moules 34 durant leur progression et les forcent à rester parfaitement contigus. Ils sont naturellement interrompus au droit du poste de transfert C (figure 1) pour y permettre la montée successive des moules 34. Pour ce pas entraver les déplacements des skis 46, situés également au-dessus des rails 35, une portion des contre-rails 56 est supprimée à l'extrémité correspondante, et remplacée par un court contre-rail central 57. A leur autre extrémité, du côté de la sortie des moules chargés, les contre-rails 56 se terminent par des éléments de freinage 58 maintenant constamment les moules 34 en juxtaposition rigoureuse sur les rails 35.

12

REVENDICATIONS

1.- Procédé de moulage de caillé pour la fabrication de fromages de petites dimensions à partir d'un mélange caillé-sérum, caractérisé par le fait qu'il consiste à agglomérer le caillé en une colonne compacte dans un tube perforé vertical fixe et à faire tomber brusquement d'une hauteur déterminée, et cela de manière périodique, la colonne de caillé ainsi formée, puis à sectionner la portion de celle-ci émergeant alors au bas du tube et à placer dans un moule la tranche de caillé calibrée ainsi obtenue.

2.- Appareil permettant de mettre en oeuvre le procédé selon la revendication 1, caractérisé par le fait qu'il comprend un poste de formation, par agglomération et expulsion continues du sérum, d'au moins une colonne de caillé dans au moins un tube perforé vertical fixe, surmonté d'une trémie d'alimentation en mélange caillé-sérum, et, au-dessous, un poste de tronçonnement du caillé comportant un organe obturateur de l'issue inférieure du tube perforé, cet organe s'effaçant périodiquement, de sorte que, à chaque fois, la colonne de caillé du tube perforé tombe brusquement d'une hauteur déterminée sur un organe d'arrêt sous-jacent, la portion de caillé correspondante étant alors sectionnée, puis introduite dans un moule.

3.- Appareil selon la revendication 2, caractérisé par le fait que chaque tranche de caillé obtenue par tronçonnement de la colonne de caillé est transportée vers un poste de transfert placé à côté du poste de tronçonnement, où elle est introduite dans le moule.

4.- Appareil selon la revendication 3, caractérisé par le fait que la portion inférieure de la colonne de caillé tombe dans une bague mobile qui assure, après sectionnement de cette portion, son transport jusqu'au poste de transfert où le moule, amené sous la bague, reçoit la tranche de caillé sous l'action positive d'un poussoir qui la fait descendre de la bague dans le moule.

5.- Appareil selon la revendication 4, caractérisé par le fait que le poste de tronçonnement comprend trois plaques horizontales superposées, chacune étant animée d'un mouvement alternatif propre de translation dans son plan, savoir une première plaque qui, successivement, obture l'issue inférieure du tube perforé, s'efface puis revient en sectionnant la portion de caillé émergeant alors du tube et reposant sur une deuxième plaque, qui constitue l'organe d'arrêt précité, à l'intérieur de ladite bague, laquelle, fixée dans une troisième plaque intermédiaire qu'elle traverse par une ouverture correspondante, assure, par le mouvement de cette plaque qu'accompagne la deuxième plaque, le transport de la tranche de caillé jusqu'au poste de transfert, où la deuxième plaque s'efface, permettant le transfert de la tranche de caillé dans le moule.

6.- Appareil selon la revendication 4 ou 5, caractérisé par le fait qu'il est pourvu de rails de guidage passant par le poste de transfert, sur lesquels progresse pas à pas une série de moules, et que, à chaque pause de la progression, un moule se trouve exactement à l'aplomb de la bague garnie de caillé et arrêtée dans le poste de transfert, ce moule étant soulevé alors des rails et amené au voisinage du bord inférieur de la bague, puis ramené sur les rails où il participe de nouveau à la progression pas à pas de la série de moules, jusqu'à son évacuation de l'appareil du fait même de cette progression.

7.- Appareil selon la revendication 6, caractérisé par le fait qu'il comprend un poste de distribution de moules qui place ceux-ci automatiquement, à partir d'un carter d'alimentation, en succession sur les rails de guidage et les y fait avancer pas à pas.

8.- Appareil selon la revendication 7, caractérisé par le fait que le poste de distribution comprend une paire de lames pointues animées d'un mouvement alternatif parallèle aux rails, lesquelles viennent s'introduire entre le moule inférieur, reposant sur les rails, et les autres moules empilés dans ledit carter, et soutiennent ces derniers en libérant ledit moule inférieur que des coulisseaux, solidaires desdites lames, poussent en direction du poste de transfert, et avec lui tous les moules déjà placés en succession sur les rails, les lames et les coulisseaux revenant ensuite dans leur position initiale, de sorte que la pile de moules retombe sur les rails.

9.- Appareil selon l'une quelconque des revendications 4 à 8, caractérisé par le fait qu'il comporte un groupe de tubes perforés formant autant de colonnes de caillé dont les portions inférieures, simultanément libérées et sectionnées, donnent naissance à chaque fois à un groupe de tranches de caillé remplissant un groupe de bagues et transféré par un groupe de poussoirs solidaires dans un moule unique comportant un groupe d'alvéoles distincts dont chacun reçoit une tranche de caillé.

10.- Appareil selon l'une quelconque des revendications 2 à 9, caractérisé par le fait que le tube perforé ou le groupe de tubes perforés est entouré d'une enceinte étanche dont l'intérieur est divisé en deux parties par une cloison horizontale, l'enceinte étant munie dans chacune de ces parties d'une tubulure d'évacuation du sérum.

FIG.1

0023941

# FIG.2

FIG.3

FIG.4

0023941

FIG.5

FIG.6

00023941

0023941

FIG.7

FIG.8

0023941

Office européen des brevets

## RAPPORT DE RECHERCHE EUROPEENNE

Numéro de la demande

EP 79 40 0562

| DOCUMENTS CONSIDERES COMME PERTINENTS | | | CLASSEMENT DE LA DEMANDE (Int. Cl.3) |
|---|---|---|---|
| Catégorie | Citation du document avec indication, en cas de besoin, des parties pertinentes | Revendication concernée | |
| | DE - A - 1 905 600 (J. BONGRAIN & CIE.) <br> * fig. 5 * <br> -- | 1,2 | A 01 J 25/00 <br> A 01 J 25/12 |
| | DE - A - 1 507 026 (ALPMA ALPENLAND-MASCHINENBAU HAIN & CO KG) <br> * page 5, lines 7 à 9 * <br> -- | 1,2 | |
| | DE - A - 1 582 941 (ALPMA ALPENLAND-MASCHINENBAU HAIN & CO KG) <br> * page 6, lignes 5 à 26 * <br> -- | 1,2, 4 | DOMAINES TECHNIQUES RECHERCHES (Int. Cl.3) |
| | DE - A1 - 2 537 933 (STORK AMSTERDAM B.V.) <br> * fig. 4 * <br> -- | 10 | A 01 J 25/00 |
| A | DE - A1 - 2 612 938 (WINCANTON ENGINEE-RING LTD.) <br> * fig. 1 * <br> -- | | |
| A | DE - B - 1 582 950 (BEDRIJVEN VAN HET NEDERLANDS INSTITUUT VOOR ZUIVELONDER-ZOEK) <br> * fig. 1 * <br> -- | | CATEGORIE DES DOCUMENTS CITES |
| A | FR - A - 1 453 759 (P.D. FOUREIX) <br> * fig. 1 * <br> -- | | X: particulièrement pertinent <br> A: arrière-plan technologique <br> O: divulgation non-écrite <br> P: document intercalaire <br> T: théorie ou principe à la base de l'invention <br> E: demande faisant interférence <br> D: document cité dans la demande <br> L: document cité pour d'autres raisons |
| A | FR - A - 2 048 092 (B.S. DESBORNES) <br> * fig. 1 * <br> -- ./.. | | &: membre de la même famille, document correspondant |

| | X | Le présent rapport de recherche a été établi pour toutes les revendications | |
|---|---|---|---|
| Lieu de la recherche <br> Berlin | Date d'achèvement de la recherche <br> 09-04-1980 | Examinateur <br> BITTNER | |

OEB Form 1503.1  06.78

0023941

Office européen
des brevets

**RAPPORT DE RECHERCHE EUROPEENNE**

Numéro de la demande

EP 79 40 0562

- page 2 -

| | DOCUMENTS CONSIDERES COMME PERTINENTS | | CLASSEMENT DE LA DEMANDE (int. Cl.3) |
|---|---|---|---|
| Catégorie | Citation du document avec indication, en cas de besoin, des parties pertinentes | Revendication concernée | |
| A | DE - B - 1 298 357 (H. WALDNER KG)<br>* fig. 1 *<br>-- | | |
| A | DE - B2 - 2 112 028 (HOLVRIEKA INTER-<br>NATIONAL B.V.)<br>* fig. 1 *<br>---- | 3 | |

DOMAINES TECHNIQUES RECHERCHES (int. Cl.3)

OEB Form 1503.2   06.78